# EUROPÄISCHE PATENTSCHRIFT

(11) **EP 1 437 524 B1**
(45) Veröffentlichungstag und Bekanntmachung des Hinweises auf die Patenterteilung: **19.07.2006**
(21) Anmeldenummer: 03029839.2
(22) Anmeldetag: 24.12.2003
(51) Int. Cl.: F16F 9/48

(54) **Vorrichtung zur Dämpfung bzw. Abbremsung von beweglichen Möbelteilen von Möbelstücken**
Apparatus for damping and braking moveable parts of furniture
Dispositif d'amortissement et de freinage pour éléments de meubles

(30) Priorität: 11.01.2003 DE 10300732
(43) Veröffentlichungstag der Anmeldung: 14.07.2004
(73) Patentinhaber: ALFIT AKTIENGESELLSCHAFT, 6840 Götzis (AT)
(72) Erfinder: Lautenschläger, Gerhard, 64395 Brensbach (DE)
(74) Vertreter: Helber, Friedrich

(56) Entgegenhaltungen:
- DE-A- 4 236 151
- GB-A- 1 125 104
- GB-A- 2 070 730
- US-A- 4 405 119

## Beschreibung

Die Erfindung betrifft eine Vorrichtung zum Dämpfen bzw. Abbremsen der Bewegung von relativ zu einem unbeweglichen Möbelteil beweglichen Möbelteilen zumindest während eines Teilabschnitts der gesamten Relativbewegung mit einem Zylinder, in welchem ein Kolben längsverschieblich gelagert ist, welcher innerhalb des Zylinders auf seinen gegenüberliegenden Stirnseiten in Abhängigkeit von seiner Verschiebungsstellung größenveränderliche, mit einem flüssigen Dämpfungsmedium gefüllte Arbeitsräume bildet, die über im Kolben und/oder Zylinder vorgesehene Überströmöffnungen oder Kanäle einen gedrosselten Übertritt des flüssigen Dämpfungsmediums von einem zum anderen Arbeitsraum ermöglichen, wobei auf einer Seite des Kolbens eine abgedichtet aus dem zugeordneten Ende des Zylinders herausgeführte Kolbenstange angeschlossen ist, über deren kolbenabgewandtes äußeres Ende die Bewegung des zu dämpfenden oder abzubremsenden Möbelteils auf den Kolben übertragen wird, und zum Ausgleich des sich durch das Volumen der Kolbenstange beim Einfahren verändernden Gesamtvolumen der Arbeitsräume eine Volumen-Ausgleichsvorrichtung vorgesehen ist, und der Drosselquerschnitt der Überström-Öffnungen oder Kanäle in Abhängigkeit von der Verschiebungsstellung des Kolbens derart veränderlich ausgebildet ist, dass sich während des Dämpfungs- oder Bremshubs eine sich ändernde Dämpfungs- bzw. Bremscharakteristik ergibt.

Derartige Dämpfungs- bzw. Bremsvorrichtungen dienen dann im Möbelbau dazu, um die beim schnellen schwungvollen Schließen von Türen bzw. Schließen von Schubladen von Schränken bei der stoßartigen Abbremsung des am Korpus anschlagenden bewegten Möbelteils entstehenden Beanspruchungen und Geräusche zu vermeiden oder doch weitgehend zu verringern. Solche mit gasförmigen Stoffen, wie z.B. atmosphärischer Luft oder viskosen Flüssigkeiten, wie z.B. Silikonöl als Dämpfungsmedium arbeitende Dämpfungsvorrichtungen sind in unterschiedlichen Ausgestaltungen bekannt (z.B. DE 195 22 254 A1). Gegenüber den mit gasförmigem Dämpfungsmedium arbeitenden Vorrichtungen haben die mit flüssigem Dämpfungsmedium arbeitenden Vorrichtungen den Vorteil, dass diese flüssigen Dämpfungsmedien praktisch inkompressibel sind, so dass sie keine Rückfederungseigenschaften aufweisen, welche den beweglichen Möbelteil nach Erreichen der Schließstellung wieder etwas aus der eigentlichen Schließstellung zurück zu bewegen suchen. Außerdem können Flüssigkeits-Dämpfer mit vergleichsmäßig geringeren Abmessungen hergestellt werden. Dabei tritt das Problem auf, dass die zur Dämpfung eines bewegten Möbelteils zu erzeugenden Dämpfungs- bzw. Bremskräfte auch von der Masse des jeweiligen Möbelteils bzw. dessen Schließgeschwindigkeit abhängen.

Bei den in Radaufhängungen von Kraftfahrzeugen zur Dämpfung der Schwingungsbewegung der Räder beim Einfedern eingesetzten hydraulischen Stoßdämpfern ist es bekannt, eine veränderliche Dämpfungscharakteristik dadurch zu verwirklichen, dass im Kolben des Dämpfers wenigstens in Überstömung Öffnungen für das Hydraulikmedikum vorgesehen ist, in welchem ein Ventilelement angeordnet ist, welches durch hubabhängige Veränderungen des Durchlassquerschnitts der Überstromöffnung eine gewünschte veränderliche Dämpfungscharakteristik zu verwirklichen (GB-A-2070730). Schon aufgrund der erheblichen Unterschiede der Abmessungen solcher Kraftfahrzeug-Stoßdämpfer im Vergleich zu der Dämpfungsvorrichtung für Möbelteile ist die Ausgestaltung des bekannten Dämpfers nicht in Dämpfungsvorrichtungen im Möbelbau übertragbar, welche mit möglichst geringen Abmessungen hergestellt werden müssen.

Der Erfindung liegt die Aufgabe zugrunde, eine geeignete Vorrichtung zur Dämpfung- bzw. Abbremsung von beweglichen Möbelteilen anzugeben,in welcher bei vergleichsweise kompakter Bauart unterschiedliche Dämpfungscharakteristiken verwirklichbar sind.

Ausgehend von einer mit flüssigem Dämpfungsmedium arbeitenden Vorrichtung der eingangs erwähnten Art wird diese Aufgabe erfindungsgemäß dadurch gelöst,dass die Kolbenstange an dem mit Überström-Öffnungen versehenen Kolben um einen vorgegebenen Längshub verschieblich angekoppelt ist und in ihrem kolbenzugewandten Endbereich eine mit Überström-Öffnungen mit im Vergleich zum Querschnitt der Kolben-Überström-Öffnungen verringertem Drosselquerschnitt versehene Rückschlagscheibe verringerten Außendurchmessers aufweist, welche beim dämpfenden bzw. bremsenden Arbeitshub in dichtende Anlage an die zugewandte Kolben-Stirnseite, beim Rückhub dagegen in eine von der Kolben-Stirnseite beabstandete Stellung verschoben ist. Dadurch wird erreicht, dass beim Dämpfungshub die Drosselwirkung in der im Drosselquerschnitt verringerten Überström-Öffnungen der Rückschlagscheiben erzeugt wird, während das Dämpfungsmedium beim Rückhub über die im Querschnitt größer bemessene Überström-Öffnungen im Kolben übertreten kann. D.h. die gewünschte hohe Dämpfungswirkung tritt nur beim Arbeitshub auf, während beim Rückhub keine oder nur geringere Dämpfungskräfte erzeugt werden.

Zur Änderung der Dämpfungs- bzw. Bremscharakteristik kann in der Zylinder-Innenwandung wenigstens ein zumindest abschnittsweise in Hubrichtung verlaufender vertiefter Überström-Kanal vorgesehen sein, dessen Querschnitt in Hubrichtung entsprechend der gewünschten Drosselcharakteristik veränderlich ausgebildet ist. In diesem Fall kann auf Überström-Öffnungen in der - gegebenenfalls vorgesehenen-Rückschlagscheibe ganz verzichtet werden, oder der Querschnitt solcher Überström-Öffnungen wird weiter verringert, so dass die erzeugten Dämpfungs- oder Bremskräfte durch Drosselung des Dämpfungsmediums in den Überström-Öffnungen der Rückschlagscheibe nur einen Teil der Gesamt-Dämpfungskräfte ausmachen.

Der Querschnitt des wenigstens einen Überström-Kanals wird dabei zweckmäßig so gewählt, dass er sich beim Dämpfungshub von der Ausgangs-Hubstellung ausgehend in Zylinder-Längsrichtung verringert. Dadurch wird eine Dämpfungscharakteristik erzielt, bei welcher die Dämpfungswirkung sich mit zunehmendem Arbeitshub erhöht.

Um zu erreichen, dass bei Erreichen des Endes des Arbeitshubs keinerlei die Kolbenstange des Dämpfers im Sinne eines Zurückfedernds beaufschlagenden Kräfte auftreten können, kann in erfindungsgemäßer Weiterbildung der Zylinder in einem dem abschließenden Dämpfungshub des Kolbens zugewandten Endbereich einen vergrößerten Durchmesser aufweisen. Sobald der Kolben in diesen Endbereich gelangt, kann also das Dämpfungsmedium ungedrosselt über den äußeren Umfang des Kolbens zurückströmen und einen Druckausgleich zwischen den beiden Arbeitsräumen herstellen.

Die Volumen-Ausgleichsvorrichtung der erfindungsgemäßen Vorrichtung kann dabei einen mit dem von der Kolbenstange durchsetzten Arbeitsraum des Zylinders verbundenen, durch aus dem Arbeitsraum übertretendes flüssiges Druckmedium volumenvergrößerbaren Ausgleichsraum aufweisen, dessen Volumen sich bei Rückführung des Dämpfungsmediums in den Arbeitsraum wieder verkleinert.

Im Sinne eines kompakten Aufbaus der Vorrichtung empfiehlt es sich dabei, den Ausgleichsraum in einer an den von der Kolbenstange durchsetzten Arbeitsraum anschließenden Verlängerung des Zylinders auszubilden.

Dabei ist eine Ausgestaltung zweckmäßig, bei welcher der Ausgleichsraum als zwischen einer die Kolbenstange umgebenden langgestreckten Führungshülse und der Innenwandung der Zylinder-Verlängerung vorgesehene Ringraum ausgebildet ist, welcher zumindest zum größeren Teil durch einen durch übertretendes flüssiges Druckmedium elastisch zusammendrückbaren Einsatz ausgefüllt ist.

Der elastisch zusammendrückbare Einsatz kann dabei als dem Ringraum im Wesentlichen entsprechend geformter Ringkörper ausgebildet sein, welcher flüssigkeitsdichte äußere Wandungen aufweist und innerhalb der äußeren Wandung mit einem elastisch zusammendrückbaren Medium, beispielsweise einem geschlossenzelligen Schaumstoff aus Gummi oder elastomerem Kunststoff gefüllt ist.

Die Erfindung ist in der folgenden Beschreibung eines Ausführungsbeispiels in Verbindung mit der Zeichnung näher erläutert, und zwar zeigt:
- Fig. 1: einen Längsmittelschnitt durch eine in der erfindungsgemäßen Weise aufgebaute Vorrichtung zum Dämpfen bzw. Abbremsen von beweglichen Möbelteilen in der nach Abschluss des Dämpfungshubes eingenommenen Endposition des Kolbens; und
- Fig. 2: eine der Figur 1 entsprechende Schnittansicht der Vorrichtung in der Ausgangsposition des Kolbens vor Auslösung des Dämpfungshubs mit ausgefahrener Kolbenstange.

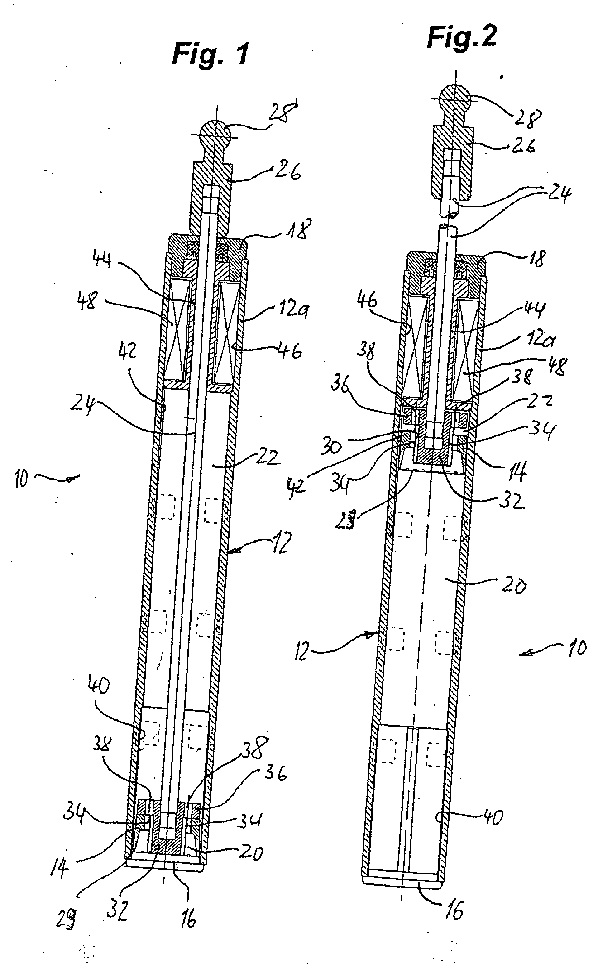

Die in den Figuren 1 und 2 gezeigte, in ihrer Gesamtheit mit 10 bezeichnete erfindungsgemäße Vorrichtung zur Dämpfung bzw. Bremsung von beweglichen Möbelteilen, z.B. Schubladen oder Türflügeln, weist ein als langgestreckter hohler Zylinder 12 ausgebildetes Gehäuse auf, in welchem ein Kolben 14 längsverschieblich eingesetzt ist, welcher den an seinem Ende durch Stirndeckel 16 bzw. 18 verschlossenen Zylinder in zwei - abhängig von der Verschiebungsstellung des Kolbens 14 - größenveränderliche Arbeitsräume 20 bzw. 22 unterteilt.

An der in den Zeichnungsfiguren oberen Stirnseite des Kolbens 14 ist eine den Arbeitsraum 22 durchsetzende Kolbenstange 24 angeschlossen, welche abgedichtet durch den Deckel 18 hindurchgeführt ist und an ihrem äußeren freien Ende ein Kupplungselement 26 trägt, welches mit einem Kugelkopf 28 zur Verbindung mit einem weiteren, die Bewegungen eines (nicht gezeigten) Möbelteils übertragenden Bauelement versehen ist.

Der mit einer integral angformten, an der Innenwandung des Zylinders 12 anliegenden umlaufenden Dichtlippe 29 versehene Kolben 14 ist nicht direkt, sondern über einen eine Mittelöffnung 30 im Kolben (14) in vorgegebenem Maße längsverschieblich durchsetzenden Fortsatz 32 angeschlossen, wobei in der Mittelöffnung 30 und in der Außenwandung des Fortsatzes 32 Kanäle vorgesehen sind, die zusammengenommen Überström-Öffnungen 34 bilden, über welche in den Arbeitsräumen 20, 22 des Zylinders enthaltenes flüssiges Dämpfungsmedium vom Arbeitsraum 22 in den Arbeitsraum 20 und umgekehrt übertreten kann.

Am kolbenstangenseitigen Ende des Fortsatzes 32 ist eine Rückschlagscheibe 36 integral angesetzt, deren Außendurchmesser geringer als der lichte Innendurchmesser des Zylinders 12 bemessen ist, und welche - in Ausrichtung zu den Überström-Öffnugnen 34 im Kolben 14 - mit Überström-Öffnungen 38 versehen ist, deren Querschnitt geringer als der Durchtrittsquerschnitt der Überström-Kanäle 34 im Kolben 14 bemessen ist. Die Rückschlagscheibe 36 legt sich bei einer von der in Figur 2 dargestellten Ausgangsposition ausgehenden Verschiebung der Kolbenstange 24 in Abwärtsrichtung an der zugewandten Stirnfläche des Kolbens 14 an und lässt somit beim anschließenden Arbeitshub flüssiges Dämpfungsmedium vom Arbeitsraum 20 ausschließlich über die Überström-Öffnungen 38 in der Rückschlagscheibe 36 in den Arbeitsraum 22 übertreten. Der Gesamt-Querschnitt der Überström-Öffnungen 38 in der Rückschlagscheibe 36 bestimmt also den die Dämpfungswirkung aufbauenden Drosselquerschnitt der Vorrichtung 10.

Wenn umgekehrt die Kolbenstange 24 ausgehend von der in Figur 1 dargestellten Endstellung aus dem Zylinder herausgezogen wird, hebt sich die Rückschlagscheibe 36 von der zugewandten Stirnseite des Kolbens 14 ab und das im Arbeitsraum 22 befindliche Dämpfungsmedium kann zusätzlich zu den Überström-Öffnungen 38 auch über den zwischen dem äußeren Umfang der Rückschlagscheibe 36 und der Zylinder-Innenwandung gebildeten Ringspalt in den Raum zwischen dem Zylinder 14 und der Rückschlagscheibe 36 und von dort über die Überström-Öffnungen 34 in den Arbeitsraum 20 übertreten. Da die Überström-Öffnungen 34 insgesamt einen größeren Querschnitt als die Überström-Öffnungen 38 aufweisen, werden also beim Rückhub keine oder deutlich geringere Dämpfungs- oder Bremskräfte auf die Kolbenstange 24 übertragen.

In dem in den Zeichnungsfiguren unteren Endabschnitt 40 weist der Zylinder 12 einen vergrößerten Durchmesser auf, so dass die Dichtlippe 29 des Kolbens 14 in diesem Endabschnitt 40 nicht dichtend an der Zylinder-Innenwandung anliegt, d.h. im Bereich des Endabschnitts 40 flüssiges Dämpfungsmedium auch über den Kolbenumfang zwischen den Arbeitsräumen 20 und 22 übertreten kann. Bei der Verschiebung des Kolbens 14 im Endabschnitt 40 sind daher keine oder allenfalls geringe Druckunterschiede im Dämpfungsmedium in den Arbeitsräumen 20 und 22 aufbaubar, was zur Folge hat, dass auch keine - oder nur vernachlässigbar geringe - Dämpfungskräfte während der Verschiebung des Kolbens 14 im Endabschnitt 40 aufgebaut werden.

Zur Verwirklichung einer sich verändernden Dämpfungs- bzw. Bremscharakteristik während des Arbeitshubs ist bei der Vorrichtung 10 im oberen Endbereich des Zylinders 12 in dessen Innenwandung ein sich über einen Teil der Innenwandung in Längsrichtung erstreckender Überström-Kanal 42 eingearbeitet, dessen Querschnitt sich vom oberen Ende her in Abwärtsrichtung verringert, so dass er also bei der Verschiebung des Kolbens 14 aus der in Figur 2 dargestellten Ausgangsposition eine sich im Durchtrittsquerschnitt verringernde Drosselöffnung bildet, die somit auch von der Verschiebungsstellung des Kolbens 14 abhängige veränderliche Drosselkräfte erzeugt.

Die die Verringerung des Gesamtvolumens der Arbeitsräume 20 und 22 im Zylinder beim Dämpfungshub durch das Volumen der zunehmend in den Zylinder 12 eintretenden Kolbenstange 24 erforderliche Volumen-Ausgleichsvorrichtung ist bei Vorrichtung 10 in einer integralen Verlängerung 12a am oberen Ende des Zylinders vorgesehen. Im Bereich der Verlängerung 12a ist in der entsprechenden langgestreckten Führungshülse für die Kolbenstange 24 und der Innenwandung der Verlängerung ein Ringraum 46 gebildet, in den das durch die Kolbenstange 14 verdrängte Volumen des Druckmediums übertreten kann. Um das beim Einschieben der Kolbenstange 24 in den Ringraum 46 übergetretene Dämpfungsmedium beim Zurückziehen der Kolbenstange wieder in die eigentlichen Arbeitsräume 22 und 20 zurückzuführen, ist der Ringraum 46 durch einen Formkörper 48 aus einem elastisch zusammendrückbaren Material, beispielsweise einem geschlossenzelligen Schaumstoff aus Gummi oder einem elastomeren Kunststoff gefüllt, welcher sich durch den Druck des übertretenden flüssigen Dämpfungsmediums zusammendrückt, bei sich vergrößerndem Volumen in den Arbeitsräumen 20, 22 durch das Ausfahren der Kolbenstange 24 jedoch wieder entspannt und so das zuvor verdrängte Dämpfungsmedium wieder in die Arbeitsräume zurückverdrängt.

## Patentansprüche

1. Vorrichtung (10) zum Dämpfen bzw. Abbremsen der Bewegung von relativ zu einem unbeweglichen Möbelteil beweglichen Möbelteilen zumindest während eines Teilabschnitts der gesamten Relativbewegung mit einem Zylinder (12), in welchem ein Kolben (14) längsverschieblich gelagert ist, welcher innerhalb des Zylinders (12) auf seinen gegenüberliegenden Stirnseiten in Abhängigkeit von seiner Verschiebungsstellung größenveränderliche, mit einem flüssigen Dämpfungsmedium gefüllte Arbeitsräume (20; 22) bildet, die über im Kolben (14) und/oder Zylinder (12) vorgesehene Überström-Öffnungen (34, 38) oder Kanäle (42) einen gedrosselten Übertritt des flüssigen Dämpfungsmediums von einem zum anderen Arbeitsraum (20; 22) ermöglichen, wobei auf einer Seite des Kolbens (14) eine abgedichtet aus dem zugeordneten Ende des Zylinders herausgeführte Kolbenstange (24) angeschlossen ist, über deren kolbenabgewandtes äußeres Ende die Bewegung des zu dämpfenden oder abzubremsenden Möbelteils auf den Kolben (14) übertragen wird, und zum Ausgleich des sich durch das Volumen der Kolbenstange (24) beim Einfahren verändernden Gesamtvolumens der Arbeitsräume (20; 22) eine Volumen-Ausgleichsvorrichtung vorgesehen ist, und der Drosselquerschnitt der Überström-Öffnungen (34; 38) oder Kanäle (42) in Abhängigkeit von der Verschiebungsstellung des Kolbens (14) derart veränderlich ausgebildet ist, dass sich während des Dämpfungs- oder Bremshubs eine sich ändernde Dämpfungs- bzw. Bremscharakteristik ergibt,
**dadurch gekennzeichnet,**
**dass** die Kolbenstange (24) an dem mit Überström-Öffnungen (34) versehenen Kolben (14) um einen vorgegebenen Längshub verschieblich angekoppelt ist und in ihrem kolbenzugewandten Endbereich eine mit Überström-Öffnungen (34) mit im Vergleich zum Querschnitt der Kolben-Überström-Öffnungen (34) verringertem Drosselquerschnitt versehene Rückschlagscheibe (36) verringerten Außendurchmessers aufweist, welche beim dämpfenden bzw. bremsenden Arbeitshub in dichtende Anlage an die zugewandte Kolben-Stirnseite, beim Rückhub dagegen in eine von der Kolben-Stirnseite beabstandete Stellung verschoben ist.

2. Vorrichtung nach Anspruch 1, **dadurch gekennzeichnet, dass** zur Änderung der Dämpfungs- bzw. Bremscharakteristik in der Zylinder-Innenwandung wenigstens ein zumindest abschnittsweise in Hubrichtung verlaufender vertiefter Überströmkanal (42) vorgesehen ist, dessen Querschnitt in Hubrichtung entsprechend der gewünschten Drosselcharakteristik veränderlich ausgebildet ist.

3. Vorrichtung nach Anspruch 2, **dadurch gekennzeichnet, dass** der Querschnitt des wenigstens einen Überströmkanals (42) sich beim Dämpfungshub von der Ausgangs-Hubstellung ausgehend in Zylinder-Längsrichtung verringert.

4. Vorrichtung nach einem der Ansprüche 1 bis 3, **dadurch gekennzeichnet, dass** der Zylinder (22) in einem dem abschließenden Dämpfungshub des Kolbens (14) zugeordneten Endbereich (40) einen vergrößerten Durchmesser aufweist.

5. Vorrichtung nach einem der Ansprüche 1 bis4, **dadurch gekennzeichnet, dass** die Volumen-Ausgleichsvorrichtung einen mit dem von der Kolbenstange (14) durchsetzten Arbeitsraum (22) des Zylinders (12) verbundenen, durch aus dem Arbeitsraum übertretendes flüssiges Druckmedium volumenvergrößerbaren Ausgleichsraum aufweist, dessen Volumen sich bei Rückführung des Dämpfungsmediums in den Arbeitsraum (22) wieder verkleinert.

6. Vorrichtung nach Anspruch 5, **dadurch gekennzeichnet, dass** der Ausgleichsraum in einer an den von der Kolbenstange durchsetzten Arbeitsraum anschließenden Verlängerung (12a) des Zylinders (12) ausgebildet ist.

7. Vorrichtung nach Anspruch 6, **dadurch gekennzeichnet, dass** der Ausgleichsraum als zwischen einer die Kolbenstange (14) umgebenden langgestreckten Führungshülse (44) und der Innenwandung der Zylinder-Verlängerung (12a) vorgesehener Ringraum (46) ausgebildet ist, welcher zumindest zum größeren Teil durch einen durch übertretendes flüssiges Druckmedium elastisch zusammendrückbaren Einsatz (48) ausgefüllt ist.

8. Vorrichtung nach Anspruch 7, **dadurch gekennzeichnet, dass** der elastische zusammendrückbare Einsatz (48) ein dem Ringraum (46) im Wesentlichen entsprechend geformter Ringkörper ist, welcher flüssigkeitsdichte äußere Wandungen aufweist und innerhalb der äußeren Wandungen mit einem elastisch zusammendrückbaren Medium gefüllt ist.

9. Vorrichtung nach Anspruch 8, **dadurch gekennzeichnet, dass** der Einsatz (48) ein Formkörper aus geschlossenzelligem Schaumstoff ist.

## Claims

1. Apparatus (10) for damping or slowing down the movement of furniture components which are movable relative to an immovable furniture component at least during a portion of the entire relative movement, with a cylinder (12) in which a piston (14) is mounted so as to be longitudinally displaceable, wherein inside the cylinder (12) the piston forms on its opposing end faces working spaces (20; 22) which are filled with a fluid damping medium and variable in size as a function of its displaced position and which by way of overflow orifices (34, 38) or channels (42) provided in the piston (14) and/or cylinder (12) enable a throttled overflow of the fluid damping medium from one working space (20; 22) to the other, wherein on one side of the piston (14) a piston rod (24) is attached which is passed in a sealed manner out of the associated end of the cylinder, the movement of the furniture component to be damped or slowed down being transmitted to the piston (14) by way of the outer end of the piston rod remote from the piston, and a volume balancing device is provided for balancing the total volume of the working spaces (20; 22) which varies due to the volume of the piston rod (24) during insertion, and the throttle cross-section of the overflow openings (34; 38) or channels (42) is designed to be variable as a function of the displaced position of the piston (14) in such a way that a varying damping or slowing characteristic is produced during the damping or slowing stroke, **characterised in that** the piston rod (24) is coupled to the piston (14) provide with overflow orifices (34) so as be displaceable by a predetermined longitudinal stroke and has in its end region facing the piston a non-return plate (36) of reduced external diameter which is provided with overflow orifices (34) of reduced throttle cross-section by comparison with the cross-section of the piston overflow orifices (34) and which during the damping or slowing working stroke is displaced onto the facing end face of the piston whereas during the return stroke is it displaced into a position spaced from the end face of the piston.

2. Apparatus as claimed in Claim 1, **characterised in that** for changing of the damping or slowing characteristic there is provided in the inner wall of the cylinder at least one recessed overflow channel (42) which extends at least in portions in the direction of travel and of which the cross-section in the direction of travel is designed to be variable according to the desired throttle characteristic.

3. Apparatus as claimed in Claim 2, **characterised in that** during the damping stroke the cross-section of the at least one overflow channel (42) decreases in the longitudinal direction of the cylinder starting from the initial stroke position.

4. Apparatus as claimed in any one of Claims 1 to 3, **characterised in that** the cylinder (22) has an enlarged diameter in an end region (40) associated with the concluding damping stroke of the piston (14).

5. Apparatus as claimed in any one of Claims 1 to 4, **characterised in that** the volume balancing device has a balancing space which is connected to the working space (22) of the cylinder (12) through which the piston rod (14) passes and of which the volume can be increased by fluid compressed medium overflowing from the working space, the volume of the balancing space decreasing again when the damping medium is returned into the working space (22).

6. Apparatus as claimed in Claim 5, **characterised in that** the balancing space is constructed in an extension (12a) of the cylinder (12) adjoining the working space through which the piston rod passes.

7. Apparatus as claimed in Claim 6, **characterised in that** the balancing space is constructed as an annular space (46) which is provided between an elongate guide sleeve (44) surrounding the piston rod (14) and the inner wall of the cylinder extension (12a) and which is filled at least for the most part by an insert (48) which is resiliently compressible by overflowing fluid pressure medium.

8. Apparatus as claimed in Claim 7, **characterised in that** the resilient compressible insert (48) is an annular element which is shaped to correspond substantially to the annular space (46), has fluid-tight outer walls and inside the outer walls is filled with a resiliently compressible medium.

9. Apparatus as claimed in Claim 8, **characterised in that** the insert (48) is a shaped body made from closed-cell foam material.

## Revendications

1. Dispositif (10) pour l'amortissement ou le freinage du mouvement de parties de meuble mobiles par rapport à une partie de meuble immobile, au moins pendant une partie du mouvement relatif total, comportant un cylindre (12) dans lequel est monté mobile longitudinalement un piston (14) qui forme à l'intérieur du cylindre (12), sur ses côtés frontaux opposés, des espaces de travail (20 ; 22) de grandeur variable en fonction de sa position qui sont remplis d'une matière liquide d'amortissement et permettent un passage étranglé de la matière liquide d'amortissement d'un espace de travail à l'autre (20 ; 22) par des ouvertures de débordement (34, 38) prévues dans le piston (14) et/ou le cylindre (12), au piston (14) étant jointe sur un côté de celui-ci une tige de piston (24) qui sort avec étanchéité de l'extrémité correspondante du cylindre et par l'extrémité extérieure éloignée du piston de laquelle est transmis au piston (14) le mouvement de la partie de meuble à amortir ou freiner, et pour l'égalisation du volume total des espaces de travail (20 ; 22) variant lors de la rentrée du volume de la tige de piston (24) étant prévu un dispositif d'égalisation de volume, et la section d'étranglement des ouvertures de débordement (34 ; 38) ou canaux (42) étant variable en fonction de la position du piston (14) de façon telle que soit obtenue pendant la course d'amortissement ou de freinage une caractéristique variable d'amortissement ou de freinage,
**caractérisé par le fait**
**que** la tige de piston (24) est accouplée au piston (14) pourvu d'ouvertures de débordement (34) avec mobilité d'une course longitudinale fixée et présente dans sa partie d'extrémité dirigée vers le piston un disque anti-retour (36) de diamètre extérieur réduit qui est pourvu d'ouvertures de débordement (34) ayant une section d'étranglement réduite comparativement à la section des ouvertures de débordement (34) du piston et est, lors de la course de travail d'amortissement ou de freinage, amené en appui étanche sur la face frontale en regard du piston et, lors de la course de retour, par contre amené dans une position éloignée de la face frontale du piston.

2. Dispositif selon la revendication 1, **caractérisé par le fait que** pour la modification de la caractéristique d'amortissement ou de freinage est prévu dans la paroi intérieure du cylindre au moins un canal de débordement approfondi (42) qui s'étend au moins par endroits dans la direction de la course et dont la section est variable dans la direction de la course conformément à la caractéristique d'étranglement désirée.

3. Dispositif selon la revendication 2, **caractérisé par le fait que** pendant la course d'amortissement, la section du canal ou des canaux de débordement (42) diminue dans la direction longitudinale du cylindre à partir de la position initiale de course.

4. Dispositif selon l'une des revendications 1 à 3, **caractérisé par le fait que** le cylindre (22) présente un diamètre agrandi dans une partie d'extrémité (40) correspondant à la course d'amortissement finissante du piston (14).

5. Dispositif selon l'une des revendications 1 à 4, **caractérisé par le fait que** le dispositif d'égalisation de volume présente un espace d'égalisation qui communique avec l'espace de travail (22) du cylindre (12) traversé par la tige de piston (14) et dont le volume peut être augmenté par de la matière liquide sous pression sortant de l'espace de travail et ensuite diminue lors du retour de la matière d'amortissement dans l'espace de travail (22).

6. Dispositif selon la revendication 5, **caractérisé par le fait que** l'espace d'égalisation est formé dans un prolongement (12a) du cylindre (12) contigu à l'espace de travail traversé par la tige de piston.

7. Dispositif selon la revendication 6, **caractérisé par le fait que** l'espace d'égalisation est un espace annulaire (46) qui est prévu entre une douille de guidage allongée (44) entourant la tige de piston (14) et la paroi intérieure du prolongement (12a) du cylindre et est rempli au moins en grande partie par un élément rapporté (48) compressible élastiquement par de la matière liquide sous pression qui le franchit.

8. Dispositif selon la revendication 7, **caractérisé par le fait que** l'élément rapporté compressible élastiquement (48) est un corps annulaire dont la forme correspond sensiblement à celle de l'espace annulaire (46), qui présente des parois extérieures étanches aux liquides et est rempli à l'intérieur de ces parois d'une matière compressible élastiquement.

9. Dispositif selon la revendication 8, **caractérisé par le fait que** l'élément rapporté (48) est une pièce moulée en matière alvéolaire à alvéoles fermées.
